# EUROPÄISCHE PATENTSCHRIFT

(11) **EP 2 476 304 B1**
(45) Veröffentlichungstag und Bekanntmachung des Hinweises auf die Patenterteilung: **18.03.2015**
(21) Anmeldenummer: 11185859.3
(22) Anmeldetag: 20.10.2011
(51) Int. Cl.: A01D 75/28, A01F 12/44

(54) **Mähdrescher**
Combine harvester
Moissonneuse-batteuse

(30) Priorität: 14.01.2011 DE 102011000130
(43) Veröffentlichungstag der Anmeldung: 18.07.2012
(73) Patentinhaber: CLAAS Selbstfahrende Erntemaschinen GmbH, 33428 Harsewinkel (DE)
(72) Erfinder: Schulz, Waldemar, 49076 Osnabrück (DE)

(56) Entgegenhaltungen:
- EP-A1- 2 127 515
- DE-A1- 1 913 815
- DE-A1- 3 230 965
- DE-A1- 3 504 003
- GB-A- 292 386
- US-A- 3 833 006
- US-A- 3 840 022

## Beschreibung

Die vorliegende Erfindung betrifft einen Mähdrescher gemäß dem Oberbegriff des Anspruches 1.

Die DE 19 13 815 A1 beschreibt eine Druckwindreinigung für Mähdreschmaschinen, die mehrere nebeneinander angeordnete Axialgebläse aufweist, die von Hydromotoren angetrieben werden. In den Antrieb der Hydromotoren sind regelbare Drosselventile eingebaut, wodurch die Umlaufgeschwindigkeit der Axialgebläse einzeln änderbar ist.

Aus der DE 39 06 186 A1 ist ein Mähdrescher der eingangs genannten Art bekannt, der eine Schneid- und Zuführeinrichtung für Erntegut, eine Drescheinrichtung zur Abscheidung von Korn aus dem Erntegut sowie eine sich in Längsrichtung des Mähdreschers erstreckende Siebanordnung umfasst. Vor der Siebanordnung ist quer zur Längsrichtung des Mähdreschers eine Gebläseanordnung angeordnet. Von der Schneid- und Zuführeinrichtung aufgenommenes und dem Mähdrescher zugeführtes Erntegut wird der Drescheinrichtung zugeführt, um Korn aus dem Erntegut abzuscheiden. Die Drescheinrichtung scheidet einen Großteil des Korns aus dem Erntegut aus. Das verbleibende Erntegut, welches im Wesentlichen aus Stroh, und Spreu besteht, wird der Siebanordnung übergeben, um den restlichen Kornanteil im Erntegut auszuscheiden. Die vor der Siebanordnung in Querrichtung des Mähdreschers angeordnete Gebläseanordnung erzeugt einen Luftvolumenstrom, um die Siebanordnung mit Luft zu beaufschlagen, was zu einer Trennung der schwereren Körner von den leichteren Bestandteilen des Erntegutes, wie Spreu und Stroh, beiträgt. Der Wirkungsgrad der Trennung ist dabei von Gleichmäßigkeit in der Zuführung des Erntegutes an die Siebanordnung abhängig. Die Gleichmäßigkeit der Zuführung wird bei einer sich einstellenden Hanglage des Mähdreschers stark beeinflusst, indem es zu einer schwerkraftbedingten Erntegutanhäufung auf der Siebanordnung kommt.

Die DE 39 06 186 A1 schlägt eine Gebläseanordnung mit einem Querstromgebläse vor, welches sich in Fahrtrichtung über die gesamte Breite der Siebanordnung erstreckt. Das Querstromgebläse wird durch Trennwände segmentiert, um eine der Anzahl der Siebabschnitte der Siebanordnung entsprechende Anzahl von Sektoren zu erzielen, welche das Querstromgebläse mit Luft beaufschlägt. Um bei einer Hanglage des Mähdreschers die Ungleichmäßigkeit der Erntegutverteilung auszugleichen, wird die Gebläsedrehzahl entsprechend der Neigung verändert.

Als nachteilig an dieser Gebläseanordnung erweist sich, dass die Veränderung der Gebläsedrehzahl sich über die gesamte Breite der Siebanordnung gleich auswirkt. Die Reinigungsleistung während der Erntefahrt am Hang wird trotz einer konstanten Breitendurchströmung der Siebanordnung bei geringen Durchsätzen deutlich beeinträchtigt, so dass sich im Erntegut auf dem talseitigen Abschnitt der Siebanordnung schwerkraftbedingt verstärkt die Schüttphase ausbildet, während sich auf dem hangseitigen Abschnitt der Siebanordnung die Flugphase dominiert.

Aufgabe der vorliegenden Erfindung ist es, einen Mähdrescher der eingangs genannten Art bereitzustellen, bei dem sich über die gesamte Breite der Siebanordnung eine gleichmäßige Wirbelschichtphase ausbildet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass die Gebläse individuell in Abhängigkeit von einer Schichtdickenverteilung des Erntegutstromes steuerbar sind. Da die Schichtdickenverteilung während des gesamten Prozesses der Behandlung von Erntegut im Mähdrescher annähernd gleich bleibt, setzt sich eine auftretende Ungleichmäßigkeit der Schichtdicke des Erntegutstromes im Einzugs- und/oder Dreschbereich bis zum Erreichen der Reinigungseinrichtung fort. Durch die individuelle Steuerbarkeit des Luftvolumenstromes in Abhängigkeit von der Schichtdickenverteilung lässt sich diese Ungleichmäßigkeit der Verleitung im Erntegutstrom kompensieren. Dabei sind die Gebläse unabhängig voneinander ansteuerbar. Die voneinander unabhängige Steuerung des von dem jeweiligen Gebläse abgegebenen Luftvolumenstromes ermöglicht das flexible Variieren des der Siebanordnung zugeführten Luftvolumenstromes, um eine Aufrechterhaltung der Wirbelschichtphase über die gesamte Breite der Siebanordnung bei variierenden Ernte- und/oder Betriebsbedingungen zu erreichen. Durch die Mittel wird ein an die Erntebedingungen angepasster Luftvolumenstrom erzeugt, der über die Breite der Siebanordnung variieren kann. Somit lässt sich beispielsweise eine bei Hangneigung auftretende ungleichmäßige Ausbildung verschiedener Abscheidungszustände, welche durch die sich auf dem talseitigen Abschnitt der Siebanordnung schwerkraftbedingt verstärkt ausbildende Schüttphase und die sich auf dem hangseitigen Abschnitt der Siebanordnung dominierende Flugphase hervorgerufen wird, kompensieren. Ebenso lassen sich die Auswirkungen einer ungleichmäßigen Gutverteilung über die Breite der Trenn- und Abscheideorgane kompensieren.

Hierzu können die Gebläse in Abhängigkeit von mindestens einem Betriebsparameter und/oder Erntegutparameter ansteuerbar sein.

Es ist eine Steuerungsvorrichtung zur Ansteuerung der Gebläse vorgesehen, die mit einer Sensorik zur Erfassung von Betriebsparametern und/oder Erntegutparametern in Wirkverbindung steht.

Vorzugsweise kann die Ansteuerung der Gebläse derart erfolgen, dass die Strömungsgeschwindigkeit der jeweiligen Luftvolumenströme über die Breite der Siebanordnung unterschiedlich ist. Hierzu kann die Ansteuerung der Gebläse derart erfolgen, dass eine Anpassung der jeweiligen Luftvolumenströme in Abhängigkeit von der Erntegutverteilung auf der Siebanordnung erfolgt. Auf diese Weise kann auf eine sich einstellende ungleichmäßige Erntegutverteilung über die Breite der Siebanordnung der Weise reagiert werden, dass eine örtlich Kumulation von Erntegut auf der Siebanordnung, beispielsweise hervorgerufen durch Hangneigung oder durch eine ungleichmäßige Zuführung von Erntegut von den vorherigen Arbeitsorganen, zu einer individuellen Ansteuerung des diesen Bereich mit einem Luftvolumenstrom beaufschlagenden Gebläses führt, um den Luftvolumenstrom mit einer gegenüber den benachbarten Bereichen erhöhten Strömungsgeschwindigkeit zu fördern.

Alternativ oder ergänzend können die Gebläse individuell in Abhängigkeit von einer durch eine Sensorik erfassten Seitenneigung des Mähdreschers steuerbar sein. Hierzu kann beispielsweise ein Inklinometer als Sensor Anwendung finden, welches mit einer Steuereinrichtung verbunden ist. Die Steuereinrichtung wertet das Messsignal des Inklinometers aus und stellt in Abhängigkeit von dem Messsignal ein Steuersignal bereit, um das jeweilige Gebläse entsprechend anzusteuern.

In einer bevorzugten Weiterbildung kann der generierte Luftvolumenstrom jedes Gebläses individuell in Abhängigkeit von einem durch eine Druckmesseinrichtung unterhalb der Reinigungseinrichtung erfassten Luftdruck steuerbar sein.

Des Weiteren können die Gebläse in Abhängigkeit von mindestens einem durchsatzabhängigen Betriebsparameter regelbar sein. Insbesondere können die Gebläse individuell in Abhängigkeit von Reinigungsverlusten regelbar sein. Hierzu kann entsprechend einer einzuhaltenden Vorgabe eines maximalen Reinigungsverlustwertes die individuelle Regelung der Drehzahlen jedes Gebläses der Gebläseanordnung durchgeführt werden. Die tatsächlich auftretenden Reinigungsverluste werden von einer geeigneten Sensorik erfasst und von einer Steuerungseinrichtung mit den Vorgabewerten für die Reinigungsverluste verglichen, um auf der Basis des Vergleichs entsprechende Drehzahländerungen der jeweiligen Gebläses abzuleiten.

Vorzugsweise kann die Gebläseanordnung mindestens zwei einzelmotorisch angetriebene Gebläse aufweisen. Ein wesentlicher Vorteil besteht darin, dass ein energieeffizienterer Antrieb der Gebläseanordnung erreichbar ist, wenn die Gebläse individuell und sich an den bestehenden Ernte- und/oder Betriebsbedingungen orientierend steuer- oder regelbar sind.

Vorzugsweise können die einzelmotorischen Antriebe paarweise zwischen den Gebläsen oder alternativ durch die Gebläse voneinander getrennt angeordnet sein.

Insbesondere können die einzelmotorischen Antriebe als Elektromotoren ausgeführt sein. Der Einsatz von Elektromotoren vereinfacht die Drehzahlverstellung der Gebläse, da auf mechanische Mittel wie Getriebe zur Drehzahlanpassung verzichtet werden kann.

Vorteilhafterweise können die Elektromotoren als Außenläufermotoren ausgeführt sein, die Bestandteil der Gebläse sind. Der jeweilige Elektromotor ist in das Gebläse integriert, um dessen Schaufelräder direkt anzutreiben. Hierdurch wird neben dem individuellen Antreiben des jeweiligen Gebläses zudem eine Bauraumreduzierung erreicht.

Insbesondere können zur Steuerung der Elektromotoren Frequenzumrichter vorgesehen sein, durch die eine einfache Anpassung der Drehzahl der einzelnen Gebläse unabhängig voneinander erreicht wird.

In bevorzugter Weiterbildung können die Mittel als Blenden mit verstellbarer Öffnungsweite an Eintrittsöffnungen des Gebläses ausgeführt sein. Hierzu können an den Eintrittsöffnungen eines jeden Gebläses in radialer Richtung verschiebliche Bleche angeordnet sein, die diese teilweise verschließen. Gemäß einer vereinfachten Ausführung sind zwei Bleche vorgesehen, die um eine zu dem Gebläse achsparallele Achse schwenkbar an dem Gebläsegehäuse angeordnet sind. Die beiden Bleche werden aufeinander zu bewegt, um den die Öffnungsweite der Eintrittsöffnungen zu verringern. In einer weiteren Ausführungsform ist eine Irisblende vorgesehen, mit der die Öffnungsweite veränderbar ist. Die Irisblende weist den Vorteil auf, dass der ansaugbare Luftvolumenstrom exakter regulierbar ist. Die Blenden sind mit Aktoren versehen, die eine Ansteuerung der Blenden zur Variation der Öffnungsweite und damit des von dem jeweiligen Gebläse abgebbaren Luftvolumenstromes ermöglichen. Die Steuerung oder Regelung der Aktoren, mit denen die Blenden betätigbar sind, kann in der oben bereits beschriebenen Weise in Abhängigkeit von einem Erntegut- und/oder Betriebsparameter erfolgen.

Alternativ oder zusätzlich können die Mittel als Blenden mit verstellbarer Öffnungsweite an den Austrittsöffnungen des jeweiligen Gebläses ausgeführt sein. Vorzugsweise können hierbei Drosselklappen in den jeweiligen Austrittsöffnungen zum Einsatz kommen, die ebenfalls durch eine geeignete Aktorik betätigbar sind, um den aus dem jeweiligen Gebläse austretenden Luftvolumenstrom individuell beeinflussen zu können.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1: eine schematische Schnittansicht durch einen Mähdrescher;
- Fig. 2: eine perspektivische Ansicht eines einzelmotorisch angetriebenen Gebläses;
- Fig. 3: eine perspektivische Ansicht einer Gebläseanordnung eines Mähdreschers;
- Fig. 4: eine Schnittansicht der Gebläseanordnung gemäß Fig. 3;
- Fig. 5: ein Flussdiagramm, das ein Verfahren zur Ansteuerung der Gebläseanordnung visualisiert.

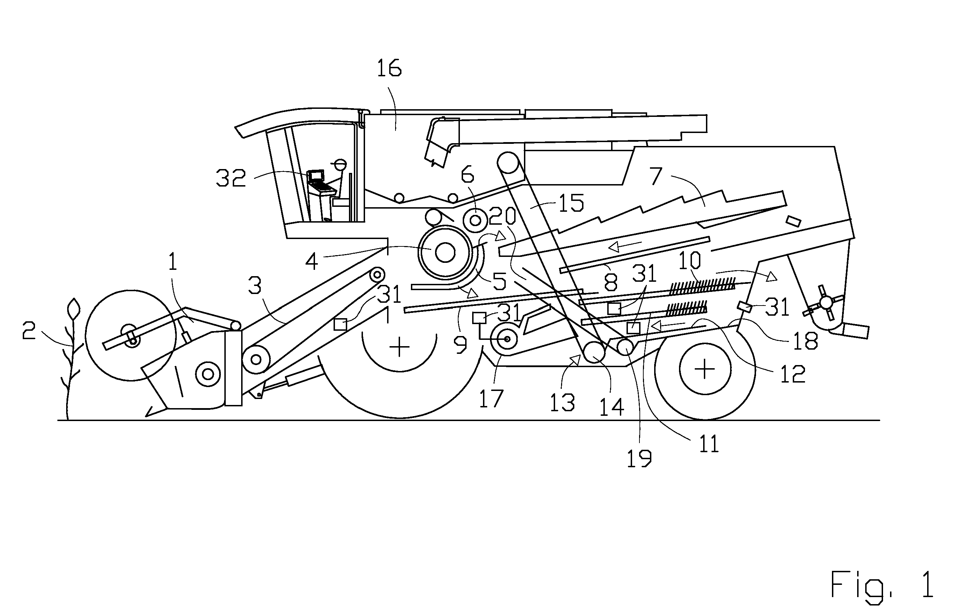

Der in Fig. 1 schematisch dargestellte Mähdrescher trägt an seiner Vorderseite ein austauschbares Vorsatzgerät 1 wie etwa ein Getreideschneidwerk zum Schneiden und Sammeln von Erntegut 2. Ein Schrägförderer 3 befördert das geschnittene Erntegut 2 zu einer mit quer zur Fahrtrichtung des Mähdreschers ausgerichteter Achse angeordneten Drescheinrichtung mit einer Dreschtrommel 4 und einem Dreschkorb 5. Aus dem Erntegut 2 ausgedroschenes Korn passiert den Dreschkorb 5. Eine Wendetrommel 6 dient zur Weiterbeförderung des gedroschenen Ernteguts zu einer Abscheidereinrichtung 7, hier dargestellt als ein Strohschüttler, die restliches Korn sowie kleinteiliges Nichtkornmaterial aus dem Strom des gedroschenen Ernteguts isoliert. Anstelle des Strohschüttlers kann als Abscheidereinrichtung 7 auch ein Axialabscheider, zum Beispiel mit einer oder zwei sich in Längsrichtung des Mähdreschers erstreckenden Rotoren, die von Abscheidekörben umgeben sind, vorgesehen sein.

Erntegut, welches durch Roste der Abscheidereinrichtung 7 hindurch gefallen ist, gelangt auf einen sich unter der Abscheidereinrichtung 7 erstreckenden, nach vorn abschüssigen Rücklaufboden 8 und über diesen zu einem Vorbereitungsboden 9, auf dem es mit unmittelbar an der Dreschtrommel 4 abgeschiedenem und durch den Dreschkorb 5 hindurch getretenen Korn zusammengeführt wird. Der dadurch erhaltene Gutstrom, der reich an Korn ist, aber auch fein zerkleinerte Nichtkornbestandteile enthält, wird auf ein Obersieb 10 einer Siebanordnung weiterbefördert.

Das Obersieb 10 und ein darunter liegendes, zu dem Obersieb 10 in etwa parallel angeordnetes Untersieb 11 sind unten und seitlich von einem Siebgehäuse umschlossen und ebenfalls Bestandteile der Siebanordnung. Das in dem Siebgehäuse angeordnete Untersieb 11 und Obersieb 10 sind Bestandteile einer Reinigungseinrichtung des Mähdreschers, um Korn von Nichtkornbestandteilen im Erntegutstrom zu trennen. Der in Fig. 1 gezeigte Boden 12 des Siebgehäuses ist von einem an einen hinteren Rand des Untersiebs 11 angrenzenden Rand aus nach vorn zu einer Schneckenmulde 13 hin abschüssig, in welcher eine Förderschnecke 14 rotiert. Die Förderschnecke 14 und ein daran angeschlossener Kornelevator 15 befördern von Nichtkornbestandteilen gereinigtes Korn, das sich auf dem Boden 12 sammelt, in einen Korntank 16 hinter der Fahrerkabine des Mähdreschers.

Eine Gebläseanordnung 17 ist vor dem Ober- und Untersieb 10, 11 angeordnet, um einen Luftvolumenstrom zu liefern, der teilweise durch die Siebe 10, 11 hindurch, teilweise über sie hinweg streicht, um leichte Bestandteile des auf den Sieben 10, 11 befindlichen Ernteguts anzuheben und fort zu tragen. Bestandteile, die von dem Luftvolumenstrom über eine hintere Kante des Obersiebs 10 hinweg getragen werden, werden direkt aus dem Mähdrescher ausgeworfen, wie durch einen Pfeil in Fig. 1 angedeutet. Bei Bestandteilen, die durch das Obersieb 10 hindurch auf das Untersieb 11 gelangt sind und dort mit dem Luftvolumenstrom fort getragen werden, handelt es sich häufig um unvollständig ausgedroschene Ährenbruchstücke. Diese fallen über die hintere Kante des Untersiebs 11 hinweg auf einen Überkehrboden 18, sammeln sich an dessen unterem Rand an einer zweiten Schnecke 19, und gelangen über diese und einen Elevator 20 zurück zur Dreschtrommel 4.

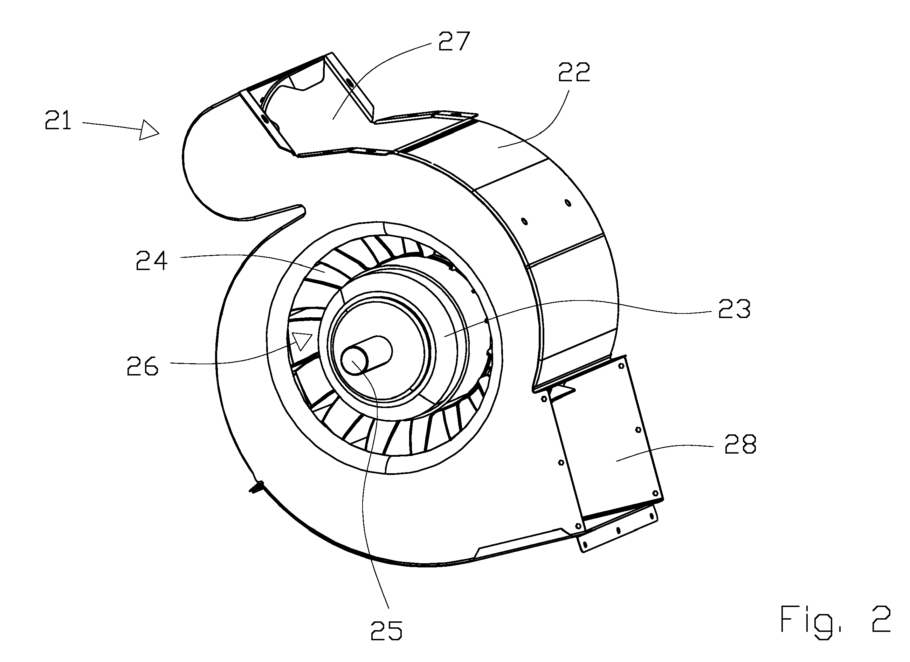

Die Darstellung in Fig. 2 zeigt ein einzelmotorisch angetriebenes Gebläse 21, welches Teil der Gebläseanordnung 17 ist. Das Gebläse 21 ist in der dargestellten Ausführungsform in einem separaten Gebläsegehäuse 22 angeordnet. Über eine radiale Eintrittsöffnung 26 in der Seitenwand des Gebläsegehäuses 22 saugt das Gebläse 21 Luft ein. Das Gebläsegehäuse 22 weist eine im Wesentlichen entgegen der Fahrtrichtung des Mähdreschers orientierte erste Austrittsöffnung 27 auf, die der Zuführung eines Luftvolumenstroms in einen Nebenkanal dient. Weiterhin weist das Gebläsegehäuse 22 eine zweite Austrittsöffnung 28 auf, aus der ein den Sieben 10, 11 zuzuführende Luftvolumenstrom austritt. Es ist eine Steuerungsvorrichtung 32 vorgesehen, um in Abhängigkeit von mindestens einem Betriebsparameter und/oder Erntegutparameter den von dem jeweiligen Gebläse 21 abgegebenen Luftvolumenstrom unabhängig voneinander zu steuern. Die Steuerungsvorrichtung 32 steht mit einer Sensorik 31 in Wirkverbindung, mit welcher die Betriebsparameter des Mähdreschers repräsentierende Signale erfasst werden. Bei den Betriebsparameter kann es sich beispielsweise um die Drehzahl des Gebläses 17, die Schichthöhe des Erntegutes im Einzugskanal, um Reinigungsverluste und dergleichen mehr handeln, Die Steuerungsvorrichtung 32 wertet diese Signale entsprechend aus und generiert Steuerungssignale, um die Aktorik des Mähdreschers anzusteuern. Weiterhin weist die Steuerungsvorrichtung 32 eine Eingabeeinheit auf, über welche die Erntegutparameter, wie die Fruchtart, der aktuelle Feuchtigkeitsgehalt des Erntegutes und dergleichen eingebbar sind.

Das in der Fig. 2 dargestellte Ausführungsbeispiel des Gebläses 21 umfasst als Mittel zur Steuerung des Luftvolumenstromes in Abhängigkeit von mindestens einem Betriebsparameter einen als Außenläufermotor 23 ausgeführten einzelmotorischen Antrieb. Auf dem Rotor des Außenläufermotors 23, der um den auf einer feststehenden Welle 25 angeordneten Stator rotiert, ist eine Vielzahl von Schaufelrädern 24 angeordnet, die Teil des Gebläses 21 sind.

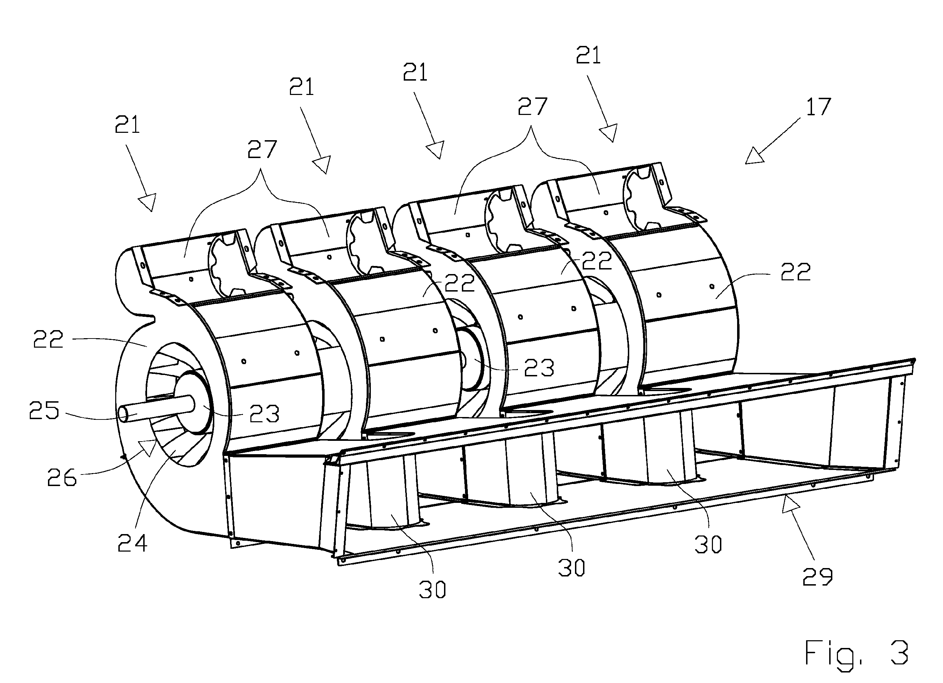

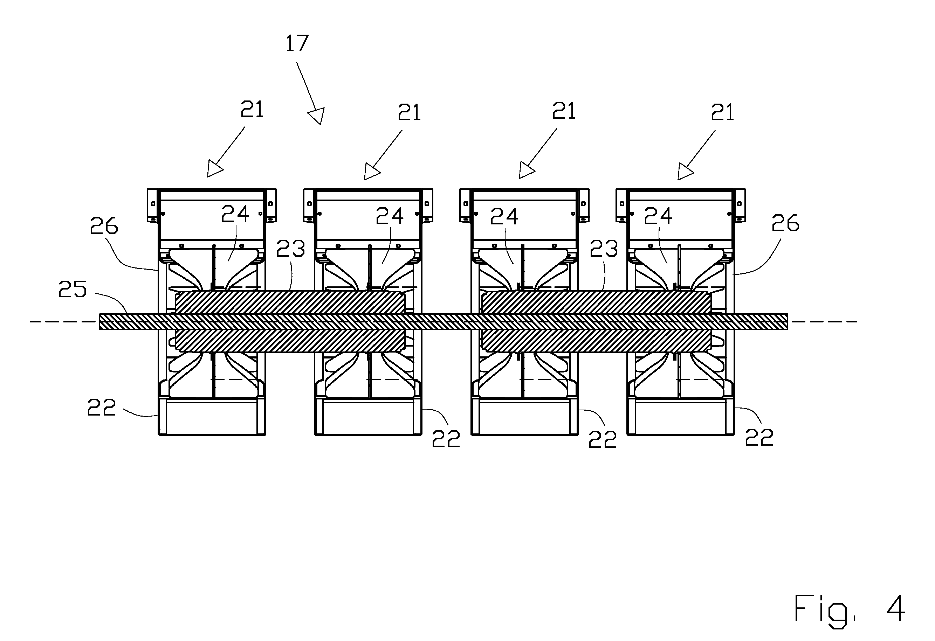

Fig. 3 und Fig. 4 zeigen eine perspektivische Ansicht beziehungsweise eine axiale Schnittansicht durch eine Gebläseanordnung 17, die paarweise einzelmotorisch angetriebene Gebläse 21 umfasst. Die Gebläse 21 sind vorzugsweise koaxial nebeneinander auf einer sich über die Breite der Gebläseanordnung 17 erstreckenden, feststehenden Welle 25 angeordnet. Die zweite Austrittsöffnung 28 des jeweiligen Gebläses 21 mündet in einen Hauptkanal 29, welcher sich im Wesentlichen über die Ausdehnung des Siebgehäuses in Fahrtrichtung des Mähdreschers gesehen erstreckt. Die von den Gebläsen 21 individuell bereitgestellten Luftvolumenströme werden von in dem Hauptkanal 29 befindlichen Wandungen 30 kanalisiert. Wie in Fig. 4 dargestellt, sind die Gebläse 21 koaxial zueinander auf der durchgehenden, feststehenden Welle 25 angeordnet, die den Stator der Außenläufermotoren 23 bildet. Gemäß dem Ausführungsbeispiel in Fig. 3 und Fig. 4 werden jeweils zwei Gebläse 21 von einem gemeinsamen Außenläufermotor 23 angetrieben. Alternative konstruktive Ausgestaltungen der Gebläseanordnung 17 sehen beispielsweise vor, die elektromotorischen Antriebe zwischen zwei Gebläsen 21 anzuordnen oder die jeweiligen elektromotorischen Antriebe einander gegenüberliegend durch ein Gebläsepaar 21 voneinander getrennt anzuordnen, wenn die jeweiligen elektromotorischen Antriebe nicht als Bestandteil des jeweiligen Gebläses 21 ausgeführt sind, sondern diese über eine separate Welle antreiben.

Die Gebläse 21 und deren Antriebe 23 können auch in einem gemeinsamen, sich über die Breite der Gebläseanordnung 17 erstreckenden Gehäuse angeordnet sein.

Jeder Außenläufermotor 23 ist mit einem Frequenzumrichter verbunden, der die Antriebsdrehzahl des Außenläufermotors 23 individuell steuert. Die Einstellung der Drehzahl des jeweiligen Gebläses 21 durch den zugehörigen Frequenzumrichter kann beispielsweise in Abhängigkeit von einer durch eine Messeinrichtung wie ein Inklinometer erfassten Längs- und/oder Querneigung des Mähdreschers gesteuert werden. Entsprechend einer erfassten Querneigung würde auf der hangaufwärts geneigten Seite des Mähdreschers die Drehzahl des Gebläses 21 reduziert, während sie auf der hangabwärts geneigten Seite erhöht würde, um den dort schwerkraftbedingt auftretenden größeren Erntegutstrom besser verarbeiten zu können.

Eine alternative Steuergröße ist der sich unterhalb der Reinigungseinrichtung aufbauende Luftdruck, der durch eine unterhalb der Reinigungseinrichtung angeordnete Sensorik 31 erfasst wird, um in Abhängigkeit von den erfassten Messwerten die Frequenzumrichter individuell anzusteuern. Die variierende, ungleichmäßige Beschickung des Ober- und Untersiebes 10, 11 mit Erntegut über deren Breite führt zu unterschiedlichen Gegendruckverhältnissen, die als Steuergröße zur individuellen Ansteuerung der Gebläse 21 herangezogen werden.

Als eine weitere Ausgestaltung zum Betreiben der Gebläseanordnung 17 kann eine Regelung der Drehzahlen der Gebläse 21 in Abhängigkeit vom Reinigungsverlust erfolgen, der durch eine geeignete Sensorik 31 erfasst wird. Die Einhaltung eines bestimmten, vorgebbaren Reinigungsverlustwertes bildet dabei die Regelgröße, die für die Einstellung der Drehzahlen der jeweiligen Gebläse 21 herangezogen wird.

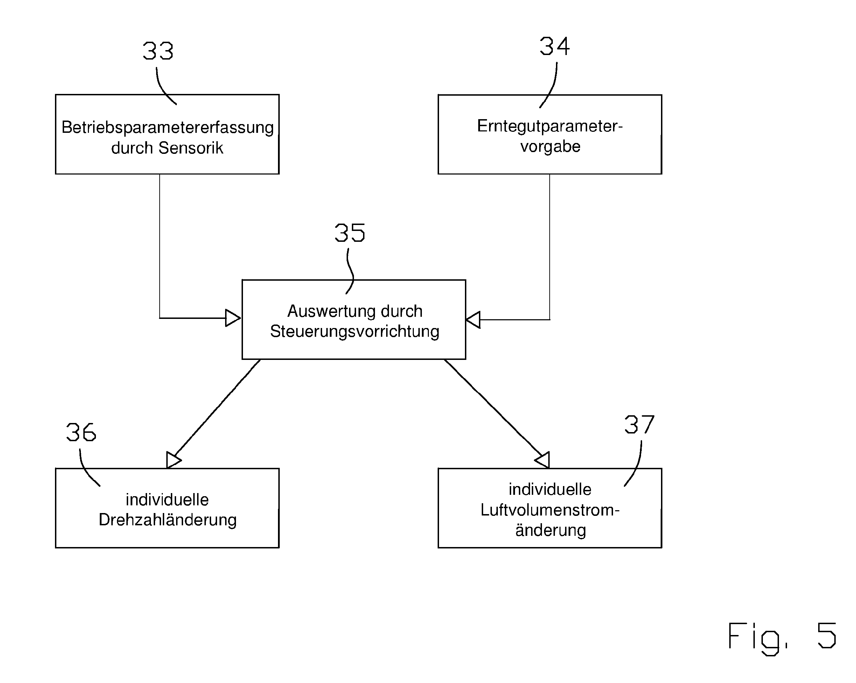

In Fig. 5 ist ein Flussdiagramm dargestellt, das schematisch ein Verfahren zur Ansteuerung der Gebläseanordnung 17 visualisiert. Der Steuerungsvorrichtung 31 werden in einem ersten Schritt 33 die von der Sensorik 31 permanent erfassten, Betriebsparameter repräsentierende Signale zugeführt. Über die Eingabeeinheit vorgebbare Erntegutparameter werden in einem zweiten Schritt 34 an die Steuerungsvorrichtung 32 weitergeleitet. Die Steuerungsvorrichtung 32 wertet in einem dritten Schritt 35 die empfangenen Informationen kontinuierlich aus, um in Abhängigkeit von mindestens einem der erfassten Betriebsparameter und/oder der eingegebenen Erntegutparameter die Gebläse 21 unabhängig voneinander anzusteuern. Hierzu kann in einem vierten Schritt 36 die Drehzahl des Außenläufermotors 23 des jeweiligen Gebläses 21 verändert werden. Alternativ kann gemäß einem fünften Schritt 37 eine Aktorik angesteuert werden, welche Blenden an den jeweiligen Eintrittsöffnungen und/ oder den jeweiligen ersten und zweiten Austrittsöffnungen der Gebläse 21 betätigt, um den abgebbaren Luftvolumenstrom durch eine Änderung des Öffnungsquerschnitts zu variieren.

In dem vierten Schritt 36 wird entsprechend einer festgestellten Querneigung des Mähdreschers das talseitige Gebläse 21 mit einer höheren Drehzahl angetrieben, als das hangseitige Gebläse 21, da sich in bekannter Weise die Verteilung der Erntegutmenge auf der Siebanordnung zur Talseite hin verschiebt. Auf diese Weise kann die sich talseitig ausbildende Schüttphase durch eine Erhöhung des Luftvolumenstromes in eine Wirbelschichtphase überführt werden, während die sich hangseitig im Erntegutstrom ausbildende Flugphase in Folge der abnehmenden Erntegutmenge durch eine entsprechende Reduzierung der Drehzahl des hangseitigen Gebläses 21 ebenfalls in eine Wirbelschichtphase überführbar ist.

Die über die Eingabeeinheit vorgebbare Fruchtart sowie der Feuchtigkeitsgehalt des Erntegutes werden herangezogen, um die Ansteuerung der einzelmotorisch angetriebenen Gebläse 21 an die jeweiligen Gegebenheiten anzupassen. Hierdurch lässt sich eine Energieeffizienzsteigerung des Mähdreschers erreichen, da die Gebläseanordnung 17 stets mit einer in der jeweiligen Erntesituation erforderlichen Antriebsleistung beaufschlagt werden kann

**Bezugszeichenliste**

| | | | |
|---|---|---|---|
| 1 | Vorsatzgerät | 20 | Elevator |
| 2 | Erntegut | 21 | Gebläse |
| 3 | Schrägförderer | 22 | Gebläsegehäuse |
| 4 | Dreschtrommel | 23 | Außenläufermotor |
| 5 | Dreschkorb | 24 | Schaufelräder |
| 6 | Wendetrommel | 25 | Welle |
| 7 | Abscheideeinrichtung | 26 | Eintrittsöffnung |
| 8 | Rücklaufboden | 27 | Erste Austrittsöffnung |
| 9 | Vorbereitungsboden | 28 | Zweite Austrittsöffnung |
| 10 | Obersieb | 29 | Hauptkanal |
| 11 | Untersieb | 30 | Wandung |
| 12 | Boden | 31 | Sensorik |
| 13 | Schneckenmulde | 32 | Steuerungsvorrichtung |
| 14 | Förderschnecke | 33 | Erster Schritt |
| 15 | Kornelevator | 34 | Zweiter Schritt |
| 16 | Korntank | 35 | Dritter Schritt |
| 17 | Gebläseanordnung | 36 | Vierter Schritt |
| 18 | Überkehrboden | 37 | Fünfter Schritt |
| 19 | Zweite Schnecke | | |

## Patentansprüche

1. Mähdrescher, mit einer Schneid- und Zuführeinrichtung (1, 3) für Erntegut (2), einer Drescheinrichtung (4, 5, 6) zur Abscheidung von Korn aus dem Erntegut (2), einer in Längsrichtung des Mähdreschers angeordneten Siebanordnung (10, 11) sowie einer vor der Siebanordnung (10, 11) quer zur Längsrichtung des Mähdreschers angeordneten Gebläseanordnung (17) mit mindestens zwei Gebläsen (21), wobei die Gebläse (21) unabhängig voneinander ansteuerbar sind, **dadurch gekennzeichnet, dass** die Gebläse (21) in Abhängigkeit von einer Schichtdickenverteilung des Erntegutstromes steuerbar sind.

2. Mähdrescher wobei die Gebläse (21) unabhängig voneinander ansteuerbar sind, **dadurch gekennzeichnet, dass** die Gebläse (21) in Ab-hängigkeit von einer Schichtdickenverteilung steuerbar sind. nach Anspruch 1, **dadurch gekennzeichnet, dass** die Gebläse (21) in Abhängigkeit von mindestens einem Betriebsparameter und/oder einem Erntegutparameter ansteuerbar sind.

3. Mähdrescher nach einem der Ansprüche 1 oder 2, **dadurch gekennzeichnet, dass** eine Steuerungseinrichtung (32) zur Ansteuerung der Gebläse (21) vorgesehen ist, die mit einer Sensorik (31) zur Erfassung von Betriebsparametern und/oder Erntegutparametern in Wirkverbindung steht.

4. Mähdrescher nach einem der Ansprüche 1 bis 3, **dadurch gekennzeichnet, dass** die Ansteuerung der Gebläse (21) derart erfolgt, dass die Strömungsgeschwindigkeit der jeweiligen Luftvolumenströme über die Breite der Siebanordnung (10, 11) unterschiedlich ist.

5. Mähdrescher nach einem der Ansprüche 1 bis 4, **dadurch gekennzeichnet, dass** die Ansteuerung der Gebläse (21) derart erfolgt, dass eine Anpassung der jeweiligen Luftvolumenströme in Abhängigkeit von der Erntegutverteilung auf der Siebanordnung (10, 11) erreichbar ist.

6. Mähdrescher nach einem der Ansprüche 1 bis 5, **dadurch gekennzeichnet, dass** die Gebläses (21) in Abhängigkeit von einer durch eine Sensorik (31) erfasste Seitenneigung des Mähdreschers steuerbar sind.

7. Mähdrescher nach einem der Ansprüche 1 bis 6, **dadurch gekennzeichnet, dass** die Gebläse (21) in Abhängigkeit von einem durch eine Druckmesseinrichtung unterhalb der Reinigungseinrichtung erfassten Luftdruck steuerbar sind.

8. Mähdrescher nach einem der Ansprüche 1 bis 4, **dadurch gekennzeichnet, dass** die Gebläse (21) in Abhängigkeit von Reinigungsverlusten regelbar sind.

9. Mähdrescher nach einem der Ansprüche 1 bis 8, **dadurch gekennzeichnet, dass** die Gebläseanordnung (17) mindestens zwei einzelmotorisch angetriebene Gebläse (21) aufweist.

10. Mähdrescher nach Anspruch 9, **dadurch gekennzeichnet, dass** die einzelmotorischen Antriebe paarweise zwischen zwei Gebläsen (21) angeordnet sind.

11. Mähdrescher nach einem der Ansprüche 9 oder 10, **dadurch gekennzeichnet, dass** die einzelmotorischen Antriebe als Elektromotoren ausgeführt sind.

12. Mähdrescher nach Anspruch 11, **dadurch gekennzeichnet, dass** die Elektromotoren als Außenläufermotoren (23) ausgeführt sind, die Bestandteil der Gebläse (21) sind.

13. Mähdrescher nach einem der Ansprüche 1 bis 9, **dadurch gekennzeichnet, dass** die Gebläse (21) an der Eintrittsöffnung (26) Blenden mit verstellbarer Öffnungsweite aufweisen.

14. Mähdrescher nach einem der Ansprüche 1 bis 9, **dadurch gekennzeichnet, dass** die Gebläse (21) an ihren Austrittsöffnungen (27, 28) Blenden mit verstellbarer Öffnungsweite aufweisen.

## Claims

1. A combine harvester comprising a cutting and feed device (1, 3) for crop material (2), a threshing device (4, 5, 6) for separating grain from the crop material (2), a sieve arrangement (10, 11) arranged in the longitudinal direction of the combine harvester, and a blower arrangement (17) which is arranged upstream of the sieve arrangement (10, 11) transversely relative to the longitudinal direction of the combine harvester and comprising at least two blowers (21), wherein the blowers (21) are actuable independently of each other, **characterised in that** the blowers (21) are controllable in dependence on a layer thickness distribution of the flow of crop material.

2. A combine harvester according to claim 1 **characterised in that** the blowers (21) are actuable in dependence on at least one operating parameter and/or crop material parameter.

3. A combine harvester according to one of claims 1 and 2 **characterised in that** there is provided a control device (32) for actuation of the blowers (21), that is operatively connected to a sensor means (31) for detecting operating parameters and/or crop material parameters.

4. A combine harvester according to one of claims 1 to 3 **characterised in that** actuation of the blowers (21) is so effected that the flow speed of the respective air volume flows is different across the width of the sieve arrangement (10, 11).

5. A combine harvester according to one of claims 1 to 4 **characterised in that** actuation of the blowers (21) is so effected that it is possible to achieve adaptation of the respective air volume flows in dependence on the crop material distribution on the sieve arrangement (10, 11).

6. A combine harvester according to one of claims 1 to 5 **characterised in that** the blowers (21) are controllable in dependence on a lateral inclination detected by a sensor means (31) of the combine harvester.

7. A combine harvester according to one of claims 1 to 6 **characterised in that** the blowers (21) are controllable in dependence on an air pressure detected by a pressure measuring device below the cleaning device.

8. A combine harvester according to one of claims 1 to 4 **characterised in that** the blowers (21) are regulatable in dependence on cleaning losses.

9. A combine harvester according to one of claims 1 to 8 **characterised in that** the blower arrangement (17) has at least two blowers (21) driven by individual motor means.

10. A combine harvester according to claim 9 **characterised in that** the individual motor means drives are arranged in paired relationship between two blowers (21).

11. A combine harvester according to one of claims 9 and 10 **characterised in that** the individual motor means drives are in the form of electric motors.

12. A combine harvester according to claim 11 **characterised in that** the electric motors are in the form of external rotor motors (23) which are a component part of the blowers (21).

13. A combine harvester according to one of claims 1 to 9 **characterised in that** the blowers (21) have orifices with an adjustable opening width at the inlet opening (26).

14. A combine harvester according to one of claims 1 to 9 **characterised in that** the blowers (21) have orifices with an adjustable opening width at their outlet openings (27,28).

## Revendications

1. Moissonneuse-batteuse, comportant un dispositif de coupe et d'alimentation (1, 3) pour un produit de récolte (2), un dispositif de battage (4, 5, 6) pour séparer le grain du produit de récolte (2), un ensemble de nettoyage (10, 11) disposé dans la direction longitudinale de la moissonneuse-batteuse ainsi qu'un ensemble de ventilateurs (17) disposé avant l'ensemble de nettoyage (10, 11) transversalement à la direction longitudinale de la moissonneuse-batteuse et comportant au moins deux ventilateurs (21), les ventilateurs (21) pouvant être commandés indépendamment l'un de l'autre, **caractérisée en ce que** les ventilateurs (21) peuvent être commandés en fonction d'une distribution d'épaisseur de couche du flux de produit de récolte.

2. Moissonneuse-batteuse selon la revendication 1, **caractérisée en ce que** les ventilateurs (21) peuvent être commandés en fonction d'au moins un paramètre de fonctionnement et/ou d'un paramètre du produit de récolte.

3. Moissonneuse-batteuse selon l'une des revendications 1 ou 2, **caractérisée en ce qu'**elle comporte un dispositif de commande (32) pour commander les ventilateurs (21), lequel est en liaison fonctionnelle avec un ensemble de capteurs (31) pour la détection de paramètres de fonctionnement et/ou de paramètres du produit de récolte.

4. Moissonneuse-batteuse selon l'une des revendications 1 à 3, **caractérisée en ce que** les ventilateurs (21) sont commandés de façon que la vitesse d'écoulement des débits volumiques d'air respectifs soit différente sur la largeur de l'ensemble de nettoyage (10, 11).

5. Moissonneuse-batteuse selon l'une des revendications 1 à 4, **caractérisée en ce que** les ventilateurs (21) sont commandés de façon à pouvoir adapter les débits volumiques d'air respectifs en fonction de la distribution du produit de récolte sur l'ensemble de nettoyage (10, 11).

6. Moissonneuse-batteuse selon l'une des revendications 1 à 5, **caractérisée en ce que** les ventilateurs (21) peuvent être commandés en fonction d'une inclinaison latérale de la moissonneuse-batteuse détectée par un ensemble de capteurs (31).

7. Moissonneuse-batteuse selon l'une des revendications 1 à 6, **caractérisée en ce que** les ventilateurs (21) peuvent être commandés en fonction d'une pression d'air détectée sous le dispositif de nettoyage par un dispositif de mesure de pression.

8. Moissonneuse-batteuse selon l'une des revendications 1 à 4, **caractérisée en ce que** les ventilateurs (21) sont réglables en fonction de pertes de nettoyage.

9. Moissonneuse-batteuse selon l'une des revendications 1 à 8, **caractérisée en ce que** l'ensemble de ventilateurs (17) présente au moins deux ventilateurs (21) entraînés par des moteurs individuels.

10. Moissonneuse-batteuse selon la revendication 9, **caractérisée en ce que** les entraînements à moteur individuel sont disposés par paires entre deux ventilateurs (21).

11. Moissonneuse-batteuse selon l'une des revendications 9 ou 10, **caractérisée en ce que** les entraînements à moteur individuel sont réalisés sous la forme de moteurs électriques.

12. Moissonneuse-batteuse selon la revendication 11, **caractérisée en ce que** les moteurs électriques sont réalisés sous la forme de moteurs à induit extérieur (23) qui font partie des ventilateurs (21).

13. Moissonneuse-batteuse selon l'une des revendications 1 à 9, **caractérisée en ce qu'**au niveau de l'ouverture d'entrée (26) les ventilateurs (21) comportent des obturateurs à largeur d'ouverture réglable.

14. Moissonneuse-batteuse selon l'une des revendications 1 à 9, **caractérisée en ce qu'**au niveau de leurs ouvertures de sortie (27, 28) les ventilateurs (21) comportent des obturateurs à largeur d'ouverture réglable.
